# EUROPEAN PATENT APPLICATION

(11) **EP 1 296 113 A1**
(43) Date of publication of application: **26.03.2003**
(21) Application number: 02079009.3
(22) Date of filing: 19.09.2002
(51) Int. Cl.: G01B 5/08, G01B 3/38, G01B 3/46

(54) **Method and apparatus for centring of smooth objects or objects provided with a screw thread, as well as for measuring their diameter**

(30) Priority: 19.09.2001 NL 1018990
(71) Applicant: Galestien, Reginald, NL-7861 BP Oosterhesselen (NL)
(72) Inventor: Galestien, Reginald, NL-7861 BP Oosterhesselen (NL)
(74) Representative: Prins, Adrianus Willem

(57) **Abstract**

The invention relates to a method and apparatuses for quickly and automatically centring and inserting parallel cylindrical or conical measuring objects having very different nominal diameters, such as a smooth axis, outside screw thread, smooth bores, and inside screw thread, in a one-axis measuring system such as, for instance, a universal one-axis measuring machine, with a view to enabling accurate measurement of diameter quantities, such as minor diameter, pitch diameter and outside diameter of screw thread, without it being necessary, prior to the measurement, first to search manually for the points of reversal, while the influence of the centring clamping force upon the magnitude of the measuring forces between the two measuring plungers and the surface of the measuring object is very small or nil.

## Description

This invention relates to a method and apparatus for quickly and automatically centring and inserting substantially parallel cylindrical or conical measuring objects having very different nominal diameters, such as a smooth axis, outside screw thread, smooth bores, and inside screw thread, in a one-axis measuring system such as, for instance, a universal one-axis measuring machine, with a view to enabling accurate measurement of diameter quantities, such as minor diameter, pitch diameter and outside diameter of screw thread, without it being necessary, prior to the measurement, first to search manually for the points of reversal, while the influence of the centring clamping force on the magnitude of the measuring forces between the two measuring plungers and the surface of the measuring object is very small or nil.

A measuring force which is nonconstant causes defects in the measuring value of the diameters, which is not acceptable for an accurate measurement.

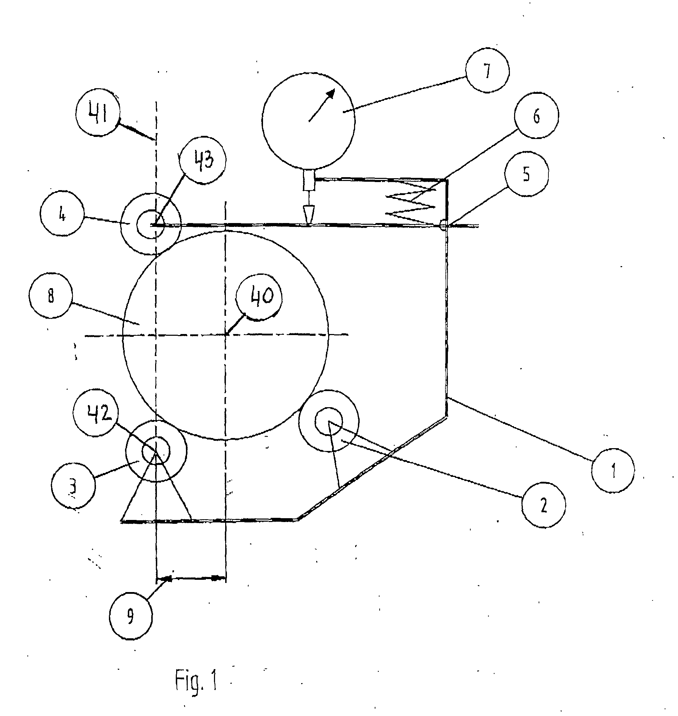

For the measuring of outside diameters there is known the three-point measuring method (KORDT, JOHANSSON GAGES). For this, reference is made to the accompanying drawing, in which Figure 1 schematically shows a measuring instrument for application of this known method. A measuring instrument for this known method comprises a frame (1), two bearing-mounted rollers (2) and (3) with bearing axes that are fixedly attached to the frame (1), a measuring roller (4) which is attached to an arm with rotation point (5) and which presses the measuring object (8) with the help of a spring (6). The measuring value of a measuring clock (7) is related to the position of the measuring roller (4).

The measuring object (8) is clamped between the rollers (2), (3) and (4) because the centre (40) of the measuring object (8) is enclosed by these three rollers and is spaced a distance (9) from the line (41) connecting the respective centres (42) and (43) of the respective measuring rollers (3) and (4). The instrument is adjusted to a calibrated adjusting gauge before it can be measured with. Because the centres of the measuring object (8) and the measuring rollers (3) and (4) are not located at the measuring axis of the measuring clock (7), it will not be possible for the difference between the diameter of the adjusting gauge and the diameter of the measuring object (8) to be measured accurately one-to-one by the measuring clock (7).

A drawback of this known three-point method is that when the diameter difference between the measuring object (8) and the adjusting gauge becomes larger, also the measuring defect becomes ever larger. In order to still enable accurate measurement with these three-point measuring instruments, the measuring range has to be small. This in turn entails the drawback that for measuring measuring objects that have different diameters, for each diameter another instrument is needed.

It is an aim of the invention to overcome the drawbacks mentioned and in general to provide a method and apparatus with the help of which objects can be centred and inserted efficiently and reliably. To that end, there is provided, according to the invention, a method for centring and inserting substantially parallel cylindrical or conical measuring objects, such as smooth axes, outside screw threads, smooth bores, and inside screw thread of different outside diameter size in a one-axis measuring instrument for the benefit of an accurate two-point diameter measurement, wherein a measuring object is positioned such that the centre line of the measuring object coincides with the measuring axis of the measuring system in that the measuring object is being clamped and centred by two rollers, which can move synchronously and which are pressed against both sides of the measuring object, substantially at the quadrant points of the measuring object.

An apparatus according to the invention comprises a frame, in which is contained a one-axis measuring instrument, and is characterised in that the apparatus further comprises two rotation points, located symmetrically with respect to the measuring axis, with two centring levers, rotatable around the rotation points, which are each provided with a bearing-mounted roller.

The invention offers the advantage over the known three-point method that the measuring range is wide without loss of accuracy, and that the measuring objects can be clamped and rotated between rollers. One measuring instrument according to the invention replaces a large number of three-point measuring instruments.

The invention will be described for centring and measuring outside diameters of objects, but is also fully applicable for centring and measuring inside diameters of objects in a one-axis measuring system. In the following, the invention will be further explained with reference to the accompanying drawing.
Figure 1 schematically illustrates a known three-point measuring method for measuring an outside diameter of an object;
Figure 2 and Figure 3 schematically illustrate a one-axis measuring method for measuring a diameter of an object;
Figure 4 schematically illustrates a principle of the invention;
Figure 5 and Figure 6 schematically illustrate a method and apparatus according to the invention for centring objects of various diameters and for measuring the diameters of such objects;
Figure 7 schematically shows an apparatus according to the invention provided with synchronisation means; and
Figure 8 shows a variant of the apparatus of Figure 7 adapted to measure inside diameters.

Figure 1 schematically illustrates a three-point measuring method known from practice, as has already been described in the foregoing.

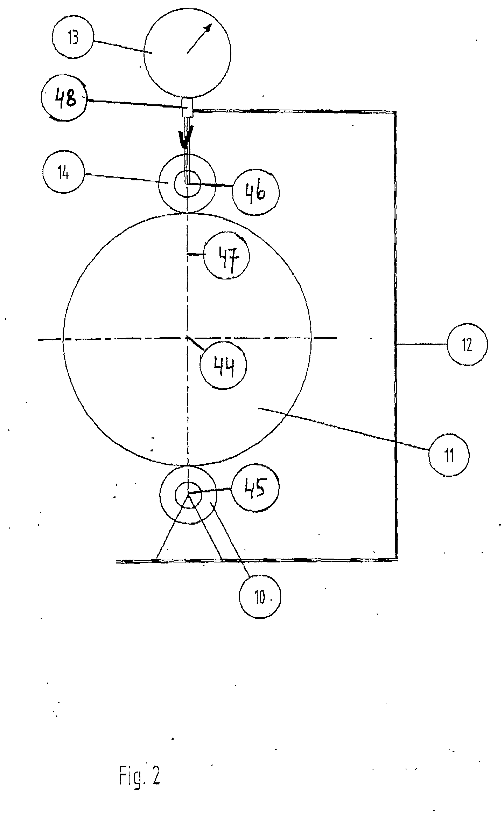

Presently, reference is made to Figure 2. The apparatus schematically shown in Figure 2 comprises a frame (12), a bearing-mounted measuring roller (10) with bearing axis which is fixedly attached to the frame (12), and a bearing-mounted measuring roller (14) with bearing axis which is movably attached to the frame (12), while the position of the measuring roller (14) is related to the measuring value of measuring clock (13). A measuring axis (47) is formed by the straight line through the centre (45) of measuring roller (10) and the centre (46) of measuring roller (14). The centre (46) of the measuring roller (14) can move along the measuring axis. In the example shown, the actuator (48) of the measuring clock (13) lies at the extension of the measuring axis (47).

To enable accurate measurement of the diameter of a measuring object, it is requisite to start from a measuring method in which the centre (44) of the measuring object (11) lies at the measuring axis (47).

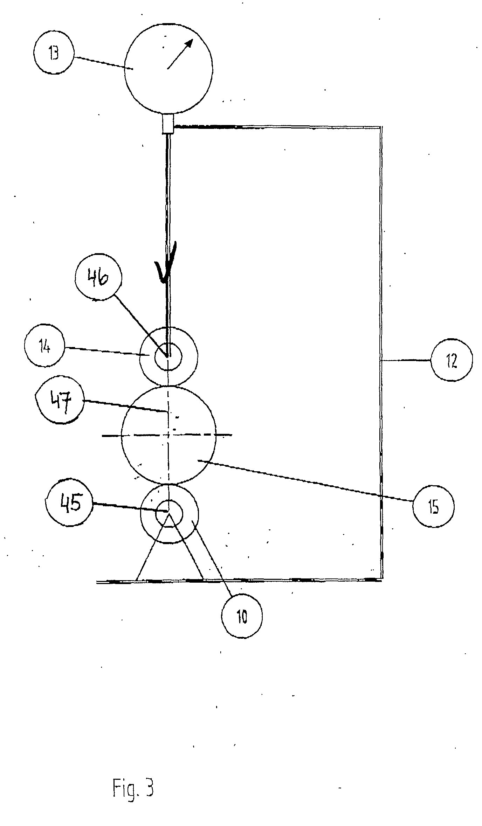

In the situation of Figure 2, the measuring object (11) can be replaced by a second measuring object (15) having a totally different diameter from the diameter of measuring object (11), and the diameters of both measuring objects (11) and (15) can be measured very accurately by measuring clock (13). The situation in which the measuring object (11) is replaced by the second measuring object (15) which has a much smaller diameter than the measuring object (11), is shown in Figure 3.

The automatic positioning and clamping at the measuring axis (47) of the centre of measuring objects of different diameters without the effect of the clamping forces affecting the measuring force, requires an additional provision.

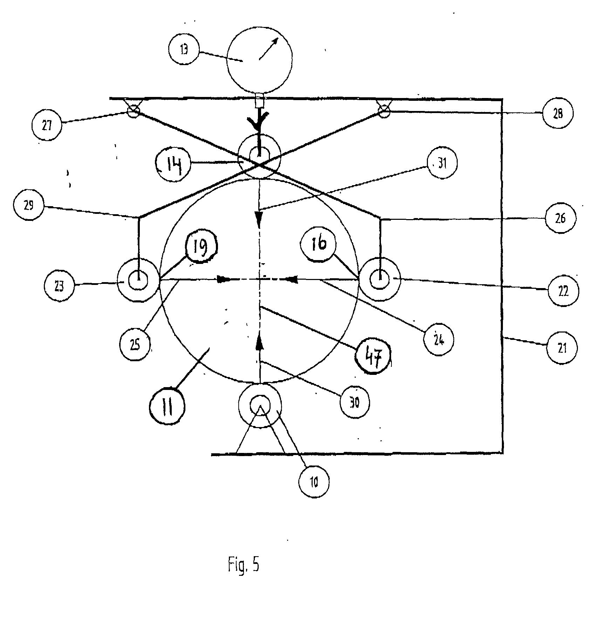

Presently, reference is made to Figure 5, which figure comprises the elements of Figure 2, but in Figure 5 the frame (12) is replaced by an adapted frame (21). The method for the automatic clamping and centring of the measuring object (11) according to the invention uses two clamping/ rollers (22) and (23), which press against the quadrant points (16) and (19) of the measuring object (11) with the help of two spring loaded lever arms (26) and (29) which rotate synchronously about two bearing axes (27) and (28), which are positioned on frame (21) symmetrically with respect to the measuring axis (47).

The clamping forces (24) and (25) exerted on the measuring object act on the quadrant points (16) and (19), that is, at the perpendicular bisector plane of the perpendicular connecting line between the centre lines of the rollers (10) and (14) when these rollers have equal diameters, and therefore do not have a force component in the direction of the measuring axis (47). The clamping forces (24) and (25) will therefore, regardless of their magnitude, have no influence on the measuring forces (30) and (31).

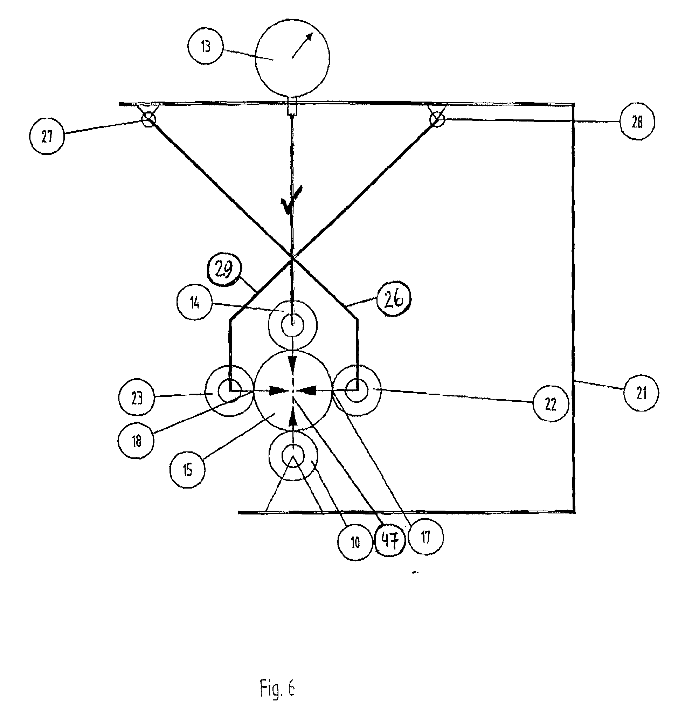

In Figure 6 a situation similar to that of Figure 5 is represented, however, with the second measuring object (15), which has a smaller diameter than the measuring object (11). The clamping/ rollers (22) and (23) now press against a second set of quadrant points (17) and (18) associated with the second measuring object (15). Also in this situation, the clamping forces act on the quadrant points and therefore do not have a force component in the direction of the measuring axis (47) either. Again, therefore, the clamping forces, regardless of their magnitude, will not influence the measuring forces between the second measuring object (15) and the measuring rollers (10) and (14).

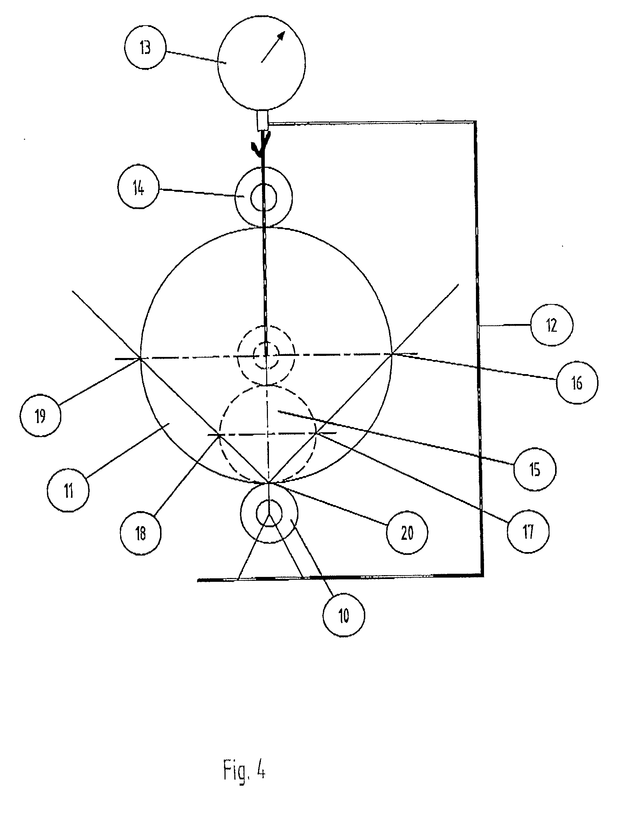

In Figure 4 there is partly shown the combined situation of the Figures 5 and 6, however, without lever arms. In case the smallest diameter to be measured is that of the second measuring object (15), and the largest diameter to be measured is that of the measuring object (11), then the quadrant points of objects having intermediate diameters are located at the straight line segment (17)-(16) and the straight line segment (18)-(19). The two clamping/ rollers (22) and (23) should therefore be able to move synchronously along these straight line segments to enable positioning of objects having intermediate diameters.

This linear translation of the clamping/ rollers (22) and (23), however, can also be approximated with sufficient accuracy by circular arced paths having a sufficiently large radius and of which the centre points have been chosen such that preferably the start and end points of the circular arced paths correspond to the start and end points of the ideal translations. By means of this approximation of the two ideal translation movements by two circular arced paths, two straight guides can be replaced by opposite-synchronously swivelling lever arms, which are much simpler in construction.

For the opposite-synchronous rotation of the two lever arms (26) and (29), numerous solutions are possible, such as, for instance, tooth belts with toothed pulleys, chains with chain wheels, gear wheels, etcetera.

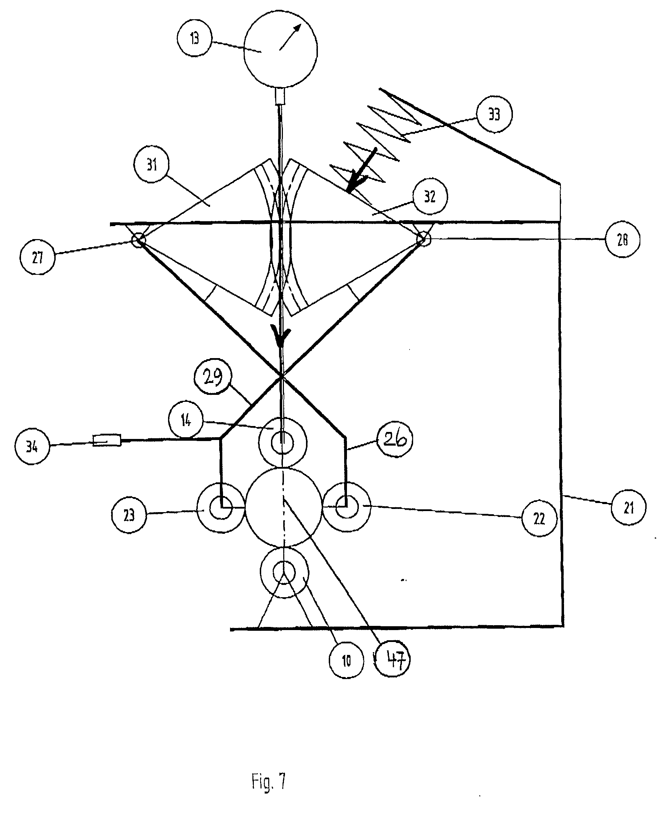

In Figure 7 there is drawn as an example a solution based upon two gear wheel segments (31) and (32). The clamping force is provided by an actuator (33), such as a spring, an electromechanical or a pneumatic actuator. The opening of the two lever arms (26) and (29) can, for instance, be carried out manually with the help of a handgrip (34). Also the lever arms can, for instance, be opened electrically or pneumatically.

The measuring rollers (10) and (14) can rotate around their bearing axes to enable the measuring object to be rolled in the measuring instrument. Thus, for instance, ovalness of the diameters can be measured. This bearing axis of roller (10) can be fixedly attached to the frame (21) and the bearing axis of roller (14) to the actuator or spindle of the measuring transducer (13). However, it is also possible that the measuring rollers (10) and (14) can also rotate independently around the measuring axis (47), so that in case of screw thread measurement the profiled rollers can direct themselves according to the pitch angle of the screw thread to be measured.

The centring method has been extensively described herein for the centring of smooth axes and outside screw thread, but it is also fully applicable for the centring of smooth bores and inside screw thread. For measuring screw thread, specially profiled rollers can be applied.

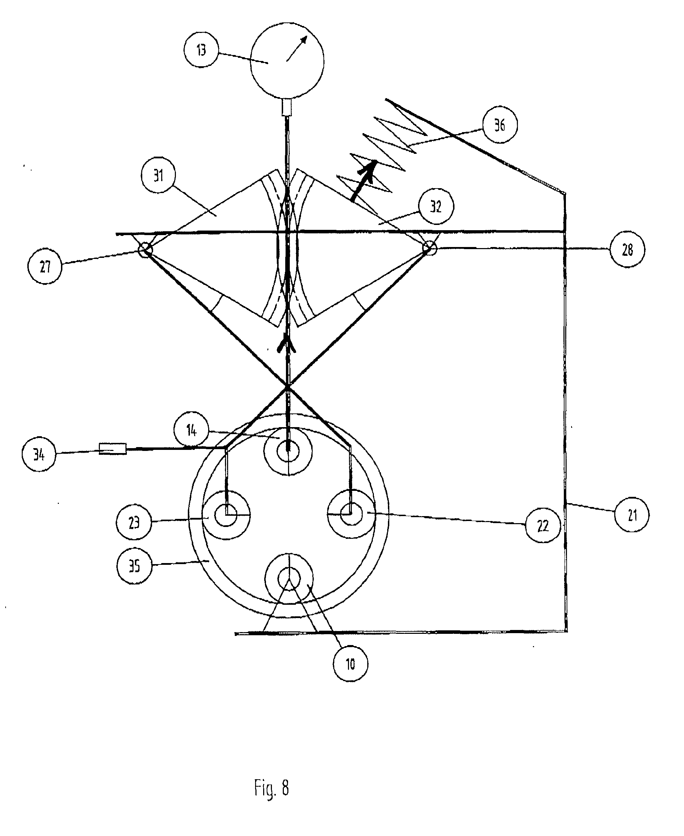

In Figure 8 there is shown *inter alia* a tensile force generating actuator (36), such as a draw spring, an electromechanical or a pneumatic actuator, and a product (35) with a smooth bore or with inside screw thread. By reversing the actuator force of actuator (36) in Figure 8 with respect to the actuator force of actuator (33) in Figure 7, and the direction of the measuring force of the measuring clock (13), the same instrument centres inside diameters based upon the same method, and such inside diameters can be measured with the same instrument.

It is remarked that, after the foregoing, various modifications and variants are obvious to the person skilled in the art. Such modifications and variants are considered to fall within the scope of the invention as represented in the claims.

## Claims

1. A method for centring and inserting substantially parallel cylindrical or conical measuring objects, such as smooth axes, outside screw threads, smooth bores, and inside screw thread of different size of the outside diameter in a one-axis measuring instrument for the benefit of an accurate two-point diameter measurement, wherein a measuring object is positioned such that the centre line of the measuring object coincides with the measuring axis of the measuring system by clamping and centring the measuring object by two centring elements, which can move synchronously and which are pressed against both sides of the measuring object, substantially at the quadrant points of the measuring object.

2. A method according to claim 1, **characterised in that** the centring elements comprise rollers.

3. An apparatus for application of a method according to claim 1, 2 or 9, comprising a frame, in which is contained a one-axis measuring instrument, **characterised in that** the apparatus further comprises two rotation points placed symmetrically with respect to the measuring axis, having two centring levers rotatable about the rotation points and each provided with a centring element.

4. An apparatus according to claim 2, **characterised in that** the centring levers each have a bearing-mounted roller, which rollers in operation engage a measuring object.

5. An apparatus according to claim 3 or 4, **characterised in that** the two centring levers in operation perform an equal, though opposite angular displacement around the two rotation points, such that the centring elements attached to the levers are always symmetrically positioned with respect to the measuring axis.

6. An apparatus according to any one of claims 3 to 5, **characterised in that** the points of contact between the centring elements and the measuring object with the smallest diameter to be measured, coincide with the quadrant points of the measuring object.

7. An apparatus according to any one of claims 3 to 6, **characterised in that** the points of contact between the centring elements and the measuring object with the largest diameter to be measured, coincide with the quadrant points of the measuring object.

8. An apparatus according to any one of claims 3 to 7, **characterised in that** the path of the centring elements with respect to the rotation points has a radius which is sufficiently large to realise, for measuring objects of a diameter ranging between the diameter sizes as referred to in claims 4 and 5, points of contact that are located sufficiently close to the quadrant points of such measuring objects, such that the component of the clamping force in the direction of the measuring axis is negligible with regard to the measuring inaccuracy of the diameter measurement.

9. An apparatus according to any one of claims 3 to 8, **characterised in that** for synchronisation of the movement of the centring elements two gear wheels or segments thereof are provided.

10. An apparatus according to any one of claims 2 to 8, **characterised in that** the levers are arranged to be moved manually, electromechanically, electrically or pneumatically.

11. A method for measuring the diameter of cylindrical or conical measuring objects or a screw thread provided on or in that object, by means of a one-axis measuring instrument for the benefit of an accurate two-point measurement, wherein a measuring object is positioned such that the centre line of the measuring object coincides with the measuring axis of the measuring system by clamping and centring the measuring object by two centring elements, which can move synchronously and which are pressed against both sides of the measuring object, substantially at the quadrant points of the measuring object.
